# FASCICULE DE BREVET EUROPEEN

(11) **EP 1 194 031 B1**
(45) Date de publication et mention de la délivrance du brevet: **24.03.2004**
(21) Numéro de dépôt: 00951602.2
(22) Date de dépôt: 16.06.2000
(51) Int. Cl.: A01B 45/02

(54) **DISPOSITIF ET PROCEDE DE TRAITEMENT DES SOLS PAR AERATION A STOCKAGE DE DECHETS**
VORRICHTUNG UND VERFAHREN ZUR BODENBELÜFTUNG MIT ABFALLSAMMLUNG
DEVICE AND METHOD FOR TREATING THE SOIL BY AERATION

(30) Priorité: 18.06.1999 FR 9907782; 18.01.2000 FR 0000608
(43) Date de publication de la demande: 10.04.2002
(73) Titulaire: Gabard, Noel, 92380 Garches (FR)
(72) Inventeur: Gabard, Noel, 92380 Garches (FR)
(74) Mandataire: Michelet, Alain
(86) Numéro de dépôt international: PCT/FR2000/001678
(87) Numéro de publication internationale: WO 2000/078122

(56) Documents cités:
- GB-A- 461 512
- US-A- 2 088 209
- US-A- 2 127 510
- US-A- 2 580 236
- US-A- 5 178 221

## Description

La présente invention concerne un dispositif et un procédé de traitement des sols par aération à stockage de déchets. Elle a des applications dans le traitement des sols dans le cadre de leur aération ou décompactage et plus particulièrement des terrains de sport ou des pelouses.

Afin de permettre un bon développement des herbacées sur les prairies ou pelouses entretenues et, par exemple, sur les terrains de golf, il est souhaitable de procéder régulièrement à une aération ou décompactage du sol. A cette fin, on utilise des appareils généralement tractés et/ou motorisés disposant d'une multitude d'aiguilles creuses, appelées louchets creux. Les louchets creux sont mobiles et sont alternativement et régulièrement introduits dans le sol, au cours du déplacement de l'appareil. Un serre-flanc peut être disposé entre les louchets. L'introduction des louchets peut être réalisée par un mouvement essentiellement vertical, généralement obtenu par la transformation d'un mouvement de rotation en mouvement de translation. L'introduction des louchets peut aussi être réalisée par la simple rotation sur le sol d'une roue lestée les portant. Dans ce dernier cas, les louchets sont courbés en fonction du diamètre de la roue afin d'éviter un mouvement de levier préjudiciable au sol. En dehors des opérations de traitement du sol, ces appareils sont généralement relevés afin de permettre leur déplacement sans que les louchets ne viennent au contact du sol. Les louchets creux permettent d'extraire du sol des carottes constituées de terre et des végétaux et racines correspondantes. La carotte précédemment formée dans un louchet creux est éjectée lors du carottage suivant, ladite carotte retombant sur le sol. La zone d'éjection peut être située à l'extrémité opposée à l'extrémité inférieure qui pénètre dans le sol. Cependant, le plus souvent, la zone d'éjection est latérale et dirigée vers l'arrière par rapport au sens d'avancement de l'appareil, une ouverture latérale étant réalisée le long du louchet et celui-ci étant orienté en conséquence dans l'appareil. Dans un deuxième temps, ces carottes sont ramassées et éliminées afin de nettoyer le sol, cette élimination étant particulièrement importante sur les terrains de golf où le sol ne doit pas présenter d'obstacle ou d'irrégularité en surface. Après le passage de ce type d'appareil, le sol présente donc une multitude de trous de carottage disposés sensiblement régulièrement le long de l'axe d'avancement de l'appareil. Afin de "gommer" les trous de carottage qui sont une source de fragilisation et d'irrégularité, le traitement du sol doit être poursuivi par un épandage de sable en surface, ledit sable étant ensuite balayé afin de combler les trous.

Ce procédé présente cependant des inconvénients. Les opérations de traitement étant mécanisées, les engins utilisés sont relativement lourds et lors de leurs passages, les organes de roulement peuvent entraîner des déformations du sol et plus particulièrement après carottage du fait de sa fragilisation. Ces techniques de traitement des sols nécessitent aussi plusieurs passages, un premier pour le carottage, un deuxième pour le ramassage des carottes et un troisième pour un épandage et brossage du sable afin de combler les trous de carottage. Il s'ensuit une durée de traitement importante pendant laquelle le terrain est impraticable et d'autre part un coût de traitement important.

La présente invention permet de résoudre ces problèmes grâce à un moyen d'une étonnante simplicité.

L'invention concerne donc un dispositif de traitement des sols par aération, le dispositif pouvant se déplacer en translation et être relevé, le dispositif comportant un bâti et des outils mobiles par rapport audit bâti, les outils étant destinés à prélever des carottes dans le sol, les carottes étant éjectées des outils dans une zone d'éjection et stockée dans ledit dispositif.

Selon l'invention, le dispositif comporte un organe de réception solidaire du bâti et disposé entre le sol et la zone d'éjection, comportant des orifices de passage des outils, et présentant une face supérieure et une face inférieure, ledit organe de réception comportant un tapis souple reposant sur le sol par au moins une partie de sa face inférieure, les carottes retombant étant stockées sur la face supérieure du tapis.

Dans divers modes de mise en oeuvre de l'invention, les moyens suivants pouvant être utilisés seuls ou combinés selon toutes les possibilités techniquement possibles, sont mis en oeuvre:
- l'organe de réception est fixé sur un serre-flanc;
- l'organe de réception est un tapis souple, ledit tapis reposant sur le sol par au moins une partie de sa face inférieure;
- la face inférieure du tapis comporte des éléments en relief par rapport au plan général de la face inférieure, lesdits éléments en relief, par exemple picots, chevrons ou autres, éventuellement associés, étant destinés à répartir le sable éventuellement préalablement répandu sur le sol;
- la face inférieure du tapis comporte au moins une série de chevrons en relief, la série de chevrons étant alignée selon un axe parallèle à l'axe d'avancement du dispositif et passant par l'axe de l'outil de carottage correspondant;
- l'orifice de passage de l'outil comporte au moins un bord biseauté et préférentiellement le bord arrière selon le sens d'avancement du dispositif, ce qui permet d'éviter le passage du sable éventuellement préalablement répandu sur le sol, vers la surface supérieure dudit tapis;
- l'orifice de passage de l'outil comporte au moins un bord surélevé, ce qui permet d'éviter le passage du sable éventuellement préalablement répandu sur le sol, vers la surface supérieure dudit tapis;
- l'organe de réception est un plateau rigide;
- le plateau rigide est articulé au bâti afin de permettre le déversement des carottes stockées lorsque le dispositif est relevé;
- un organe de déflexion est fixé sur le bâti, ledit organe étant placé en arrière de la zone d'éjection des carottes afin que les carottes éjectées soient rabattues sur l'organe de réception;
- l'organe de réception comporte au moins le long de ses deux bords latéraux libres des rebords destinés à maintenir les déchets sur l'organe de réception;
- au moins une partie des rebords destinés à maintenir les déchets sur l'organe de réception comporte des encoches, permettant plus particulièrement dans le cas d'un tapis, de permettre le pliage ou la courbure dudit tapis;
- le rebord comporte une bande profilée en L, le côté au contact du tapis étant sensiblement plat et le côté libre étant ondulé.

Dans un mode de réalisation, l'organe de réception, plateau rigide ou tapis souple, est spécifique des outils mobiles. La disposition des orifices de passage est alors adaptée à l'espacement des outils ou des unités de travail. Il convient donc de réaliser des organes de réception correspondant à tel ou tel type d'outil.

Par ailleurs, l'organe de réception est soumis au frottement du sol et donc à usure; il peut également être abîmé à cause d'un outil qui casse ou dévie ou suite à la rencontre d'un obstacle.

Il est donc nécessaire de disposer d'un stock important d'organes de réception, ce qui augmente les coûts.

Dans une forme avantageuse de réalisation, l'organe de réception est modulaire, ses divers modules constitutifs étant reliés entre eux par des articulations démontables.

Ce mode de réalisation peut en outre présenter les caractéristiques ci-après, considérées isolément ou en combinaison:
- l'organe de réception est divisé d'avant en arrière selon le sens d'avancement du dispositif, en au moins trois parties, correspondant respectivement à une partie avant, une partie intermédiaire et une partie arrière, la partie intermédiaire correspondant à la zone des orifices de passage des outils, les trois parties étant articulées entre elles par des articulations démontables;
- la partie avant est fixée sur un rouleau avant;
- la partie intermédiaire est fixée sur un serre-flanc;
- l'organe de réception est un tapis souple ou un plateau rigide;
- au moins l'une des parties de l'organe de réception est un tapis souple;
- au moins l'une des parties de l'organe de réception est un plateau rigide;
- la face inférieure de la partie avant est sensiblement lisse;
- la face inférieure de la partie intermédiaire, comporte des reliefs ou picots, par exemple d'une hauteur comprise entre 2 et 10 mm, de préférence de l'ordre de 4 mm;
- la face inférieure de la partie arrière comporte des chevrons;
- au moins une partie en tapis souple est réalisée en matière élastomérique, en particulier renforcée, avantageusement en polyuréthanne renforcé;
- l'organe de réception est divisé en au moins deux bandes articulées entre elles par au moins une articulation démontable;
- au moins une partie est divisée en au moins deux bandes articulées entre elles par au moins une articulation démontable;
- l'articulation démontable est souple;
- l'articulation démontable est constituée d'un organe allongé reliant des anneaux disposés en quinconce le long des bords articulés des parties et/ou bandes;
- la tige d'articulation est un câble souple.
   La modularité du dispositif de l'invention peut donc être obtenue selon deux axes. Une première modularité consiste à diviser l'organe de réception transversalement par rapport au sens d'avancement du dispositif en plusieurs parties, par exemple trois parties, articulées entre elles. Une seconde modularité consiste à diviser l'organe de réception perpendiculairement à la première modularité pour former des bandes longitudinales articulées entre elles et s'étendant d'avant en arrière. Enfin ces modularités peuvent être combinées, car une ou plusieurs des parties transversales constitutives de l'organe de réception, peuvent être divisées en bandes.
- le dispositif comporte un moyen de sécurité empêchant la descente des outils lorsque le tapis est replié sous les outils;
   ce repliement du tapis résulte par exemple de l'opération de déchargement des carottes stockées par au relevage des outils, marche arrière et déversement des carottes qui s'ensuit;
- le moyen de sécurité comporte un capteur optique et le tapis présente un contraste par rapport au sol, le capteur optique étant disposé pour pouvoir détecter la présence du tapis sous les outils;
- le tapis est coloré et le capteur optique présente un filtre en longueur d'onde centré sur la couleur du tapis;
- le dispositif comporte un premier moyen permettant au moins de déplier le tapis sensiblement à plat sur le sol;
   le premier moyen est utile pour étaler ou déplier le tapis suite à l'opération de déchargement des carottes stockées qui entraîne le repliement du tapis;
- le premier moyen comporte au moins un câble relié à l'extrémité d'un axe solidaire du bâti du dispositif, ledit câble étant également fixé vers l'extrémité arrière du tapis;
- le câble peut être allongé ou raccourci par une commande, ladite commande pouvant être mécanique, hydraulique, électrique;
- l'axe est mobile en rotation autour d'un point de solidarisation dudit axe sur ledit bâti, ladite rotation étant obtenue par une commande, ladite commande pouvant être mécanique, hydraulique, électrique;
- le câble est fixe et l'axe est mobile en rotation;
- le câble peut être allongé ou raccourci et l'axe est fixe;
- le câble peut être allongé ou raccourci et l'axe est mobile en rotation;
- l'axe du premier moyen peut être allongé ou raccourci;
- le premier moyen permet en outre le relevage du tapis afin que ce dernier ne repose plus sur le sol lorsque les outils sont relevés et que les opérations de traitement du sol sont terminées;
   le relevage du tapis permet au dispositif de circuler librement sur des routes ou autres sans que le tapis glisse sur le sol;
- le dispositif comporte un moyen permettant de déplier et/ou de relever le tapis.

L'invention concerne également un procédé de mise en oeuvre d'un dispositif de traitement des sols par aération consistant à prélever des carottes dans le sol avec des outils et à les stocker dans le dispositif selon les caractéristiques précédentes et comportant un tapis souple. Selon l'invention on stocke les carottes éjectées des outils et retombant sur la face supérieure du tapis souple, et. que l'on laisse reposer le tapis sur le sol par au moins une partie de sa face inférieure.

Un sablage du sol peut être effectué préalablement au carottage. Le terme préalablement signifie aussi bien que le sablage est effectué lors d'un précédent passage d'un engin, ou qu'il est effectué en avant du carottage avec le même engin qui effectue ce carottage. Ainsi le traitement du sol peut être obtenu en deux ou un seul passage. Dans un mode préféré, un sablage est effectué préalablement au carottage.

Selon un mode avantageux de réalisation, un balayage ou brossage, les deux termes étant synonymes, est effectué à l'arrière de l'organe de réception, par exemple à l'aide d'une brosse placée en arrière du dispositif.

La présente invention, en permettant le stockage des carottes, évite à l'opérateur d'avoir à repasser pour effectuer un ramassage des carottes au sol comme dans la technique traditionnelle. L'invention permet aussi d'améliorer l'efficacité des procédés de traitement des sols par la modification des étapes de traitement qu'elle permet. L'utilisation d'un tapis souple est particulièrement intéressant car le tapis peut suivre les irrégularités du terrain et permet ainsi une meilleure répartition du sable dans les trous de carottage dans le cas où un sablage est effectué préalablement, c'est à dire avant ou en avant, du carottage. La souplesse du tapis permet également de mieux répartir les carottes qui sont stockées sur la face supérieure du tapis car les déformations du tapis lorsqu'il glisse sur le sol évitent que des tas localisés trop importants puissent se former. La souplesse du tapis peut être obtenue par tout moyen: soit utilisation d'une matière souple en elle même, soit, éventuellement en combinaison, par disposition particulière de matière rigide et par exemple pièces métalliques articulées entre-elles, treillis métallique, cotte de maille métallique... La cotte de maille est envisagée car du sable et/ou d'autres éléments de petite taille qui seraient passés sur la face supérieure du tapis peuvent alors repasser sur le sol à travers le tapis.

Enfin, l'invention concerne également un procédé de traitement des sols par aération dans lequel des carottes sont prélevées du sol par un dispositif de carottage et stockées dans ledit dispositif et selon laquelle un sablage du sol est effectué préalablement au carottage.

La présente invention sera mieux illustrée sans être aucunement limitée par la description qui suit, faite en référence aux dessins annexés sur lesquels:
la figure 1 représente le dispositif à tapis en vue latérale en phase de fonctionnement;
la figure 2 représente le dispositif à tapis en vue latérale en phase de déchargement;
la figure 3 représente une perspective éclatée du montage d'un tapis sur le serre-flanc;
la figure 4 représente une perspective de la face supérieure d'un tapis;
la figure 5 représente la face inférieure d'un tapis;
la figure 6 représente une coupe transversale d'un tapis au niveau d'un orifice de passage;
la figure 7 représente le dispositif à organe de réception rigide en vue latérale en phase de déchargement;
la figure 8 représente un dispositif de traitement à rouleau ou disques;
la figure 9 représente un dispositif de traitement à disques;
la figure 10 représente en perspective un organe de réception en plusieurs parties transversales;
la figure 11 représente en perspective un organe de réception avec des bandes longitudinales;
la figure 12 représente en perspective un organe de réception avec des parties transversales et des bandes longitudinales;
la figure 13 détaille un type d'articulation pour relier les parties et/ou bandes de l'organe de réception des figures 10 à 12;
la figure 14 représente un dispositif comportant des moyens permettant de déplier et/ou de relever le tapis.

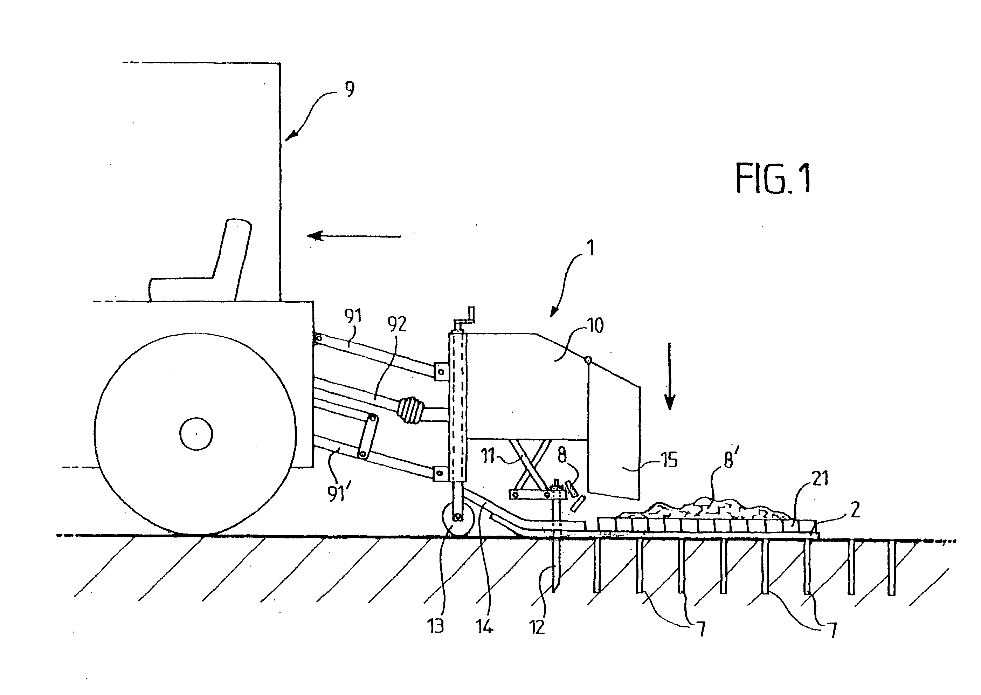

Sur la figure 1, un dispositif 1 selon un mode de réalisation de l'invention comportant un tapis souple 2 est remorqué par un tracteur 9. Le tapis peut être réalisé en toute matière résistante et souple et préférentiellement à partir de matière synthétique renforcée ou non. Le dispositif avance sur un sol herbacé, par exemple un terrain de sport. Un châssis 10 recouvre et porte les moyens d'actionnement des outils mobiles 11 portant les louchets creux 12 destinés à effectuer un carottage du sol. La liaison au tracteur est assurée par des barres de liaison 91, 91' et l'énergie mécanique est transmise du tracteur 9 aux moyens d'actionnement par l'intermédiaire d'une prise de force 92.

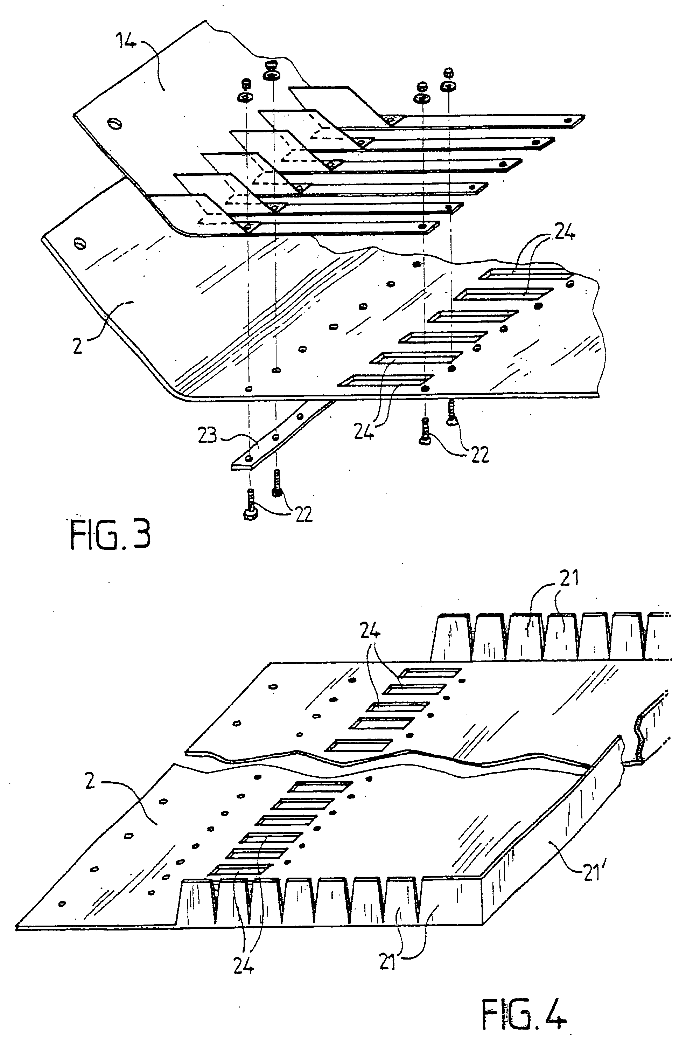

Sur la figure 1, le dispositif est en phase de fonctionnement, le bâti 10 étant descendu et le rouleau 13 reposant sur le sol. Le rouleau 13 peut être disposé sur un axe réglable en hauteur afin d'ajuster la hauteur du bâti 10 par rapport au sol et donc la profondeur de carottage. Dans un mode préféré, le tapis 2 est fixé sur le bâti 10 sur le serre-flanc 14. Le tapis est fixé sur la face inférieure du serre-flanc et dans le mode de fonctionnement le plus courant, le tapis est appliqué sur le sol sur la plus grande partie ou la totalité de sa surface inférieure car en général et en l'absence de tapis le serre-flanc 14 glisse sur le sol. Un seul louchet creux 12 est représenté pour des raisons de simplification. Le louchet 12 est ici enfoncé dans le sol. Au droit de chaque louchet, l'organe de réception comporte des orifices 24 de passage de louchet. Les louchets étant creux, des carottages sont effectués régulièrement. La carotte 8 d'un précédent forage est éjectée lors du forage suivant. Le dispositif avançant, le tracteur 9 étant en marche avant, des trous de carottage 7 sont ainsi réalisés régulièrement. Les carottes 8 éjectées des louchets creux sont stockées 8' sur l'organe de réception ou tapis 2. Au moins deux rebords latéraux 21 sont disposés le long des deux bords libres de l'organe de réception afin de maintenir les carottes 8 stockées 8' sur ledit organe et éviter qu'elles ne s'en échappent et viennent "souiller" le sol. Dans un mode préféré et dans le cas d'un tapis, les rebords latéraux sensiblement rigides comportent des encoches ou découpes ou tout autre moyen permettant au tapis de se déformer en suivant la surface du sol, tout en permettant la rétention des carottes 8 stockées 8'. Ces encoches ou découpes peuvent former des éléments à bords chevauchants, permettant le maintien de la continuité de la rétention lors des pliages, ou non. Ces moyens à encoches sont aussi destinés à permettre la courbure et le repliement du tapis dans la phase de déchargement. Le bord arrière de l'organe de réception peut comporter aussi un rebord 21' (figure 4).

L'éjection des carottes 8 pouvant se faire avec une certaine énergie, un déflecteur 15 est disposé au moins en arrière de la zone d'éjection afin de faire retomber les carottes 8 sur l'organe de réception. Le déflecteur peut être un élément rigide ou souple et est fixé sur le bâti 10; il peut s'étendre latéralement, comme représenté sur la figure 1.

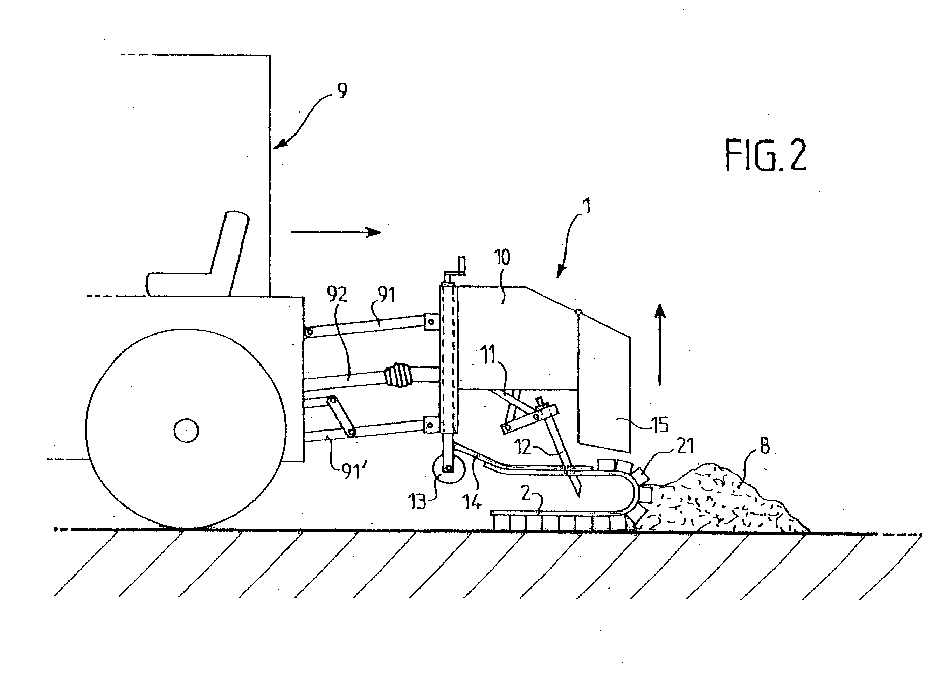

Sur la figure 2 le dispositif 1 de la figure 1 est représenté dans sa phase de déchargement, dans laquelle le bâti 10 est en position relevée et le tracteur en marche arrière. Grâce à la souplesse du tapis 2 et aux encoches ou autres des rebords latéraux 21, le tapis se replie et déverse les carottes 8 sur le sol.

Sur la figure 3, la fixation du tapis 2 sur le serre-flanc 14 est explicitée. Le tapis 2 comporte des orifices 24 de passage des louchets au droit de ces derniers. Tout type de fixation peut être utilisé, par exemple le boulonnage d'une (ou plusieurs) plaque 23 de maintien sur le serre-flanc au moins en avant de la zone des orifices 24 et en arrière de cette zone.

Sur la figure 4, le tapis 2 est représenté vu de dessus en perspective afin de visualiser la série d'orifices 24 de passage des louchets et les rebords 21 et éventuel 21'.

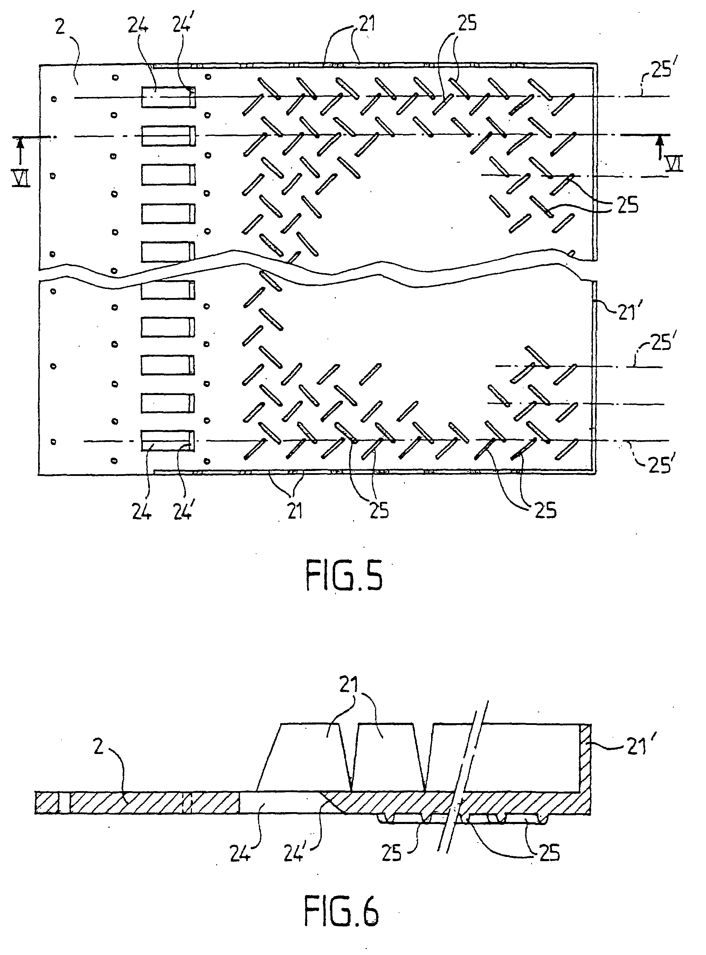

La figure 5 montre les caractéristiques de la surface inférieure du tapis 2 essentiellement au contact du sol. Des séries de chevrons 25 sont régulièrement disposées sur cette surface inférieure. Les chevrons sont des reliefs par rapport à la surface générale du tapis 2 et sont destinés à guider le sable qui a éventuellement été répandu au préalable sur le sol avant le carottage, vers les trous de carottage 7 afin de les remplir. A cette fin et dans ce mode particulier de réalisation, les séries de chevrons 25 sont disposées le long d'axes 25' qui passent par les orifices 24 et donc l'axe du louchet correspondant. Il est cependant possible dans d'autres modes de réalisation de disposer des éléments en relief sur la face inférieure du dispositif, tapis ou plateau rigide, d'un autre type et par exemple picots, ergots, formes triangulaires, rectangulaires... selon toutes orientations permettant la répartition et/ou le guidage du sable. Plusieurs types d'éléments peuvent être associés et par exemple des picots disposés en avant des chevrons selon le sens d'avancement opérationnel du dispositif.

Sur la figure 6 le bord biseauté 24', prévu dans l'orifice de passage 24 afin d'éviter que le sable éventuellement répandu sur le sol n'ait tendance à passer vers la surface supérieure du tapis, est vu en coupe transversale le long d'un axe 25'. Sur cette même figure un des rebords 21 et les chevrons 25 sont vus dans divers plans.

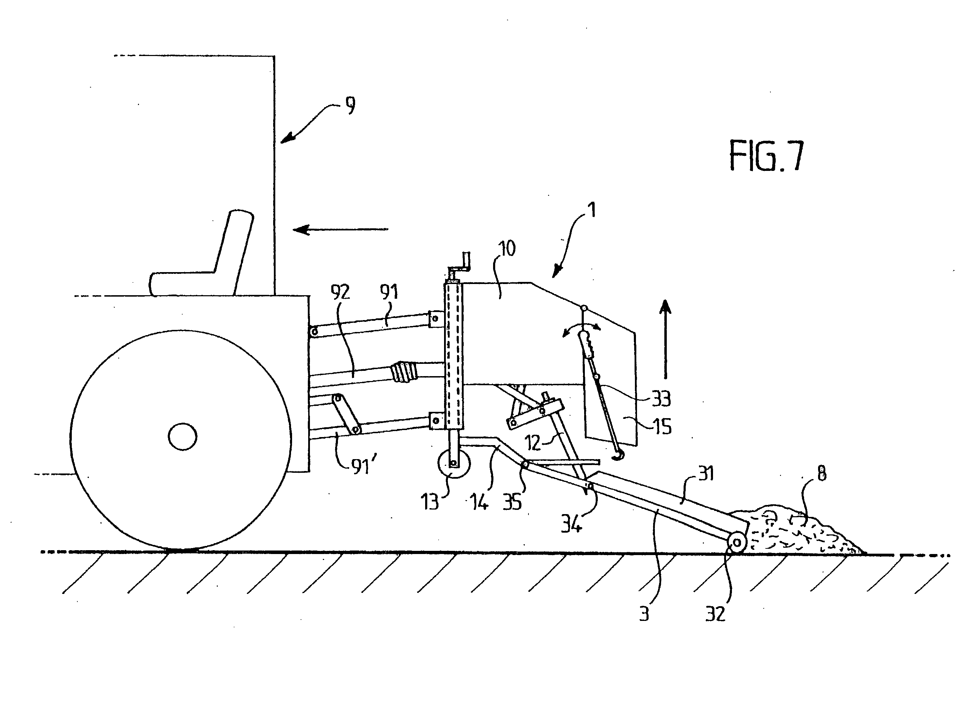

La figure 7 représente un mode de réalisation particulier où l'organe de réception est constitué par un plateau rigide 3 fixé sur le bâti 10. Le plateau 3 est disposé à une hauteur telle qu'il se situe entre le sol, sur lequel il peut éventuellement reposer directement et glisser ou indirectement par des organes de roulement, et la zone d'éjection des carottes 8. Dans un mode préféré, une articulation 35 permet le basculement et la vidange des carottes stockées sur le plateau lorsque le dispositif est relevé et que le plateau est libéré. Cette articulation peut être placée à tout endroit permettant un stockage des carottes lors du traitement et un basculement pour déversement. Sur la figure, l'articulation 35 est réalisée sur le serre-flanc 14, cependant il est envisagé dans le cadre de l'invention que le plateau et le serre-flanc ne fassent qu'un. Il est aussi envisagé que l'articulation, au lieu d'être en avant des outils soit placée latéralement, la vidange se faisant alors latéralement au lieu de l'arrière. Au moins deux rebords 31 rigides sont disposés le long des bords latéraux du plateau 3. Un moyen de roulement 32 est préférentiellement disposé vers l'extrémité du plateau. Un moyen de retenue permettant la libération du plateau pour déchargement est constitué, à titre d'exemple, par un ergot de retenue 34 et par un levier de libération 33. Tout autre moyen de manoeuvre du plateau 3 est envisagé dans le cadre de l'invention, passif, avec ou sans dispositif de rappel élastique à ressort ou autre, ou actif avec commande oléopneumatique, pneumatique, électrique, ou autre.

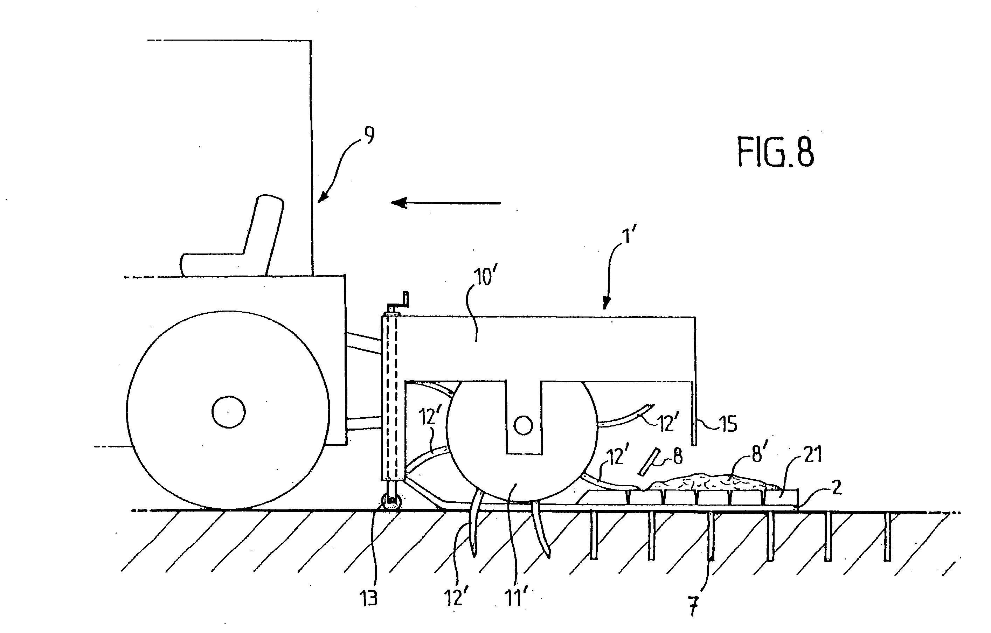

La présente invention est aussi utilisable avec les appareils d'aération comportant des louchets creux portés par un cylindre ou par une série de disques parallèles montés sur un bâti tracté ou autotracté comme représenté schématiquement figure 8. Un dispositif 1' du type rouleau 11' dans lequel un rouleau lesté ou appliqué en pression sur le sol par des moyens actifs, comporte sur sa surface des louchets creux 12' courbés. L'organe de réception 2 est fixé sur le bâti 10'. Les orifices de passage ont une longueur suffisante pour ne pas être un obstacle à la rotation des louchets 12'. Dans ce type d'appareil, le déplacement du bâti suffit pour effectuer le carottage.

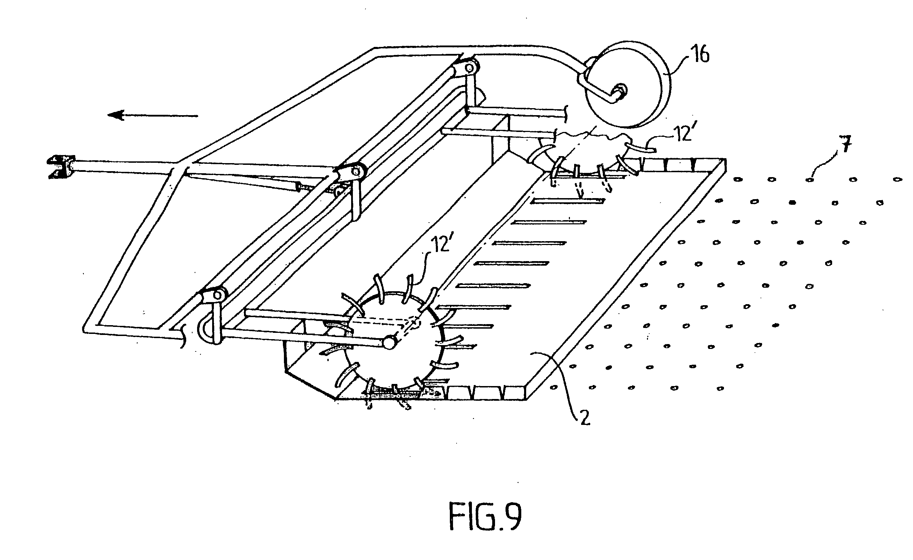

La figure 9 représente une vue écorchée d'un autre appareil du type à disques portant des louchets creux. Une partie des disques n'est pas représentée pour permettre la visualisation du tapis. Seule la roue en arrière-plan 16 est représentée, la roue symétrique placée en avant n'ayant pas été représentée.

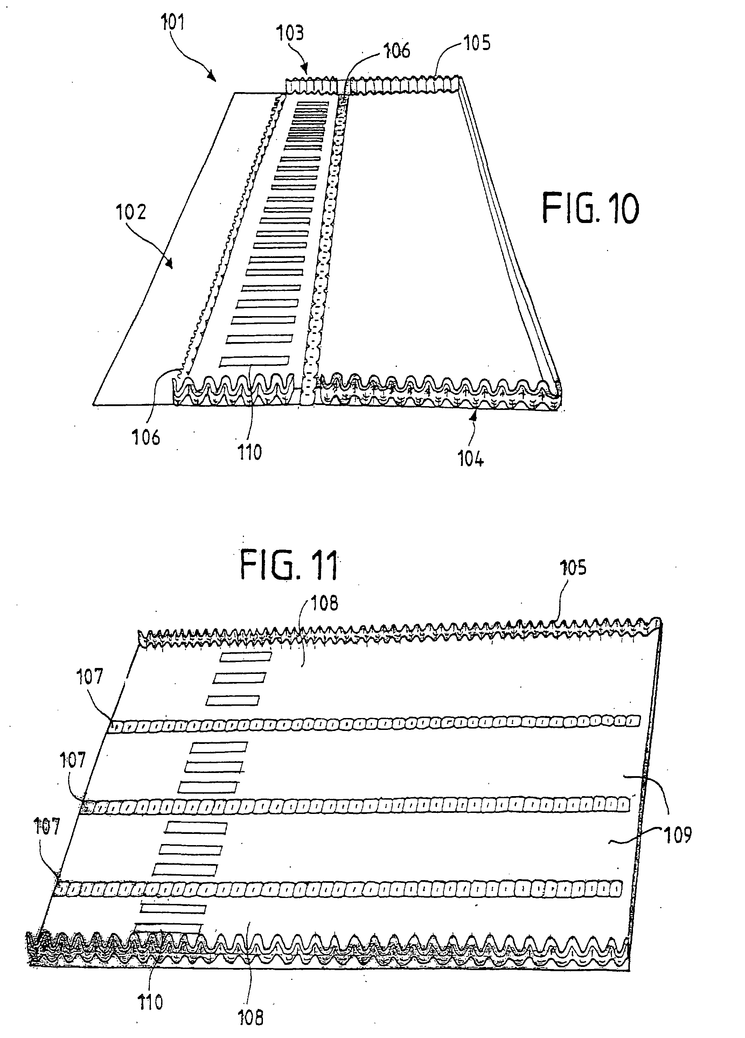

La figure 10 illustre un premier mode de modularité de l'organe de réception du dispositif. L'organe de réception 101, est divisé transversalement par rapport au sens de déplacement du dispositif, en trois parties, une première partie dite partie avant 102, une deuxième dite partie intermédiaire 103 et une troisième dite partie arrière 104. La partie avant 102 est reliée à la partie intermédiaire 103 par une articulation démontable 106. La partie intermédiaire 103 est reliée à la partie arrière 104 par une autre articulation démontable 106. La partie avant 102 est destinée à être fixée sur le châssis ou, préférentiellement sur les organes reliés au rouleau disposé en avant des outils de carottage. La partie avant 102 peut être un tapis souple ou un plateau rigide.

La partie intermédiaire 103 est percée d'orifices 110 pour le passage des outils de carottage. La partie intermédiaire 103 peut être fixée sur des serres flancs, mais elle peut également être laissée libre afin de pouvoir épouser le sol. La partie intermédiaire 103 est de préférence un tapis souple en matière synthétique renforcée et par exemple du type de celle qui est mise en oeuvre dans les bandes transporteuses. La partie intermédiaire peut comporter des éléments en relief sur sa face inférieure et dans un mode préféré des picots de 2 mm à 10 mm de hauteur, de préférence de 4 mm de hauteur environ.

La partie arrière 104 est de préférence un tapis souple bordé d'un rebord 21, 21', 105 destiné à maintenir les carottes stockées sur l'organe de réception. Dans le cas d'un tapis, le rebord 21, 21', 105 est un dispositif souple qui permet le repliement du tapis lors du déversement du stock de carottes lors d'une marche arrière du dispositif. Dans un mode préféré, le rebord est une bande profilée de matière synthétique relativement souple et en forme de L dont le côté libre est ondulé et le côté au contact du tapis est sensiblement plat afin de pouvoir y être collé, riveté ou fixé par tout autre moyen. L'ondulation du côté libre assure la souplesse permettant le pliage du tapis. Dans le cade de l'invention, il est prévu que le rebord 105 s'étende plus ou moins le long de l'organe de réception et par exemple vers l'avant le long des bords de la partie intermédiaire 103 ou encore plus en avant le long de la partie avant 102.

La partie arrière 104, de préférence en polyuréthanne renforcé, comporte à sa face inférieure des éléments en relief et préférentiellement des chevrons.

Les trois parties 102, 103, 104 étant indépendantes et reliées entre elles par des articulations démontables et de préférence souples dans le cas d'un tapis, il suffit d'utiliser la bande intermédiaire 103 spécifique des outils mis en oeuvre dans le dispositif. Par ailleurs, un matériau particulièrement résistant et/ou comportant des chevrons et donc relativement coûteux peut être utilisé pour la seule partie arrière, les autres parties étant réalisées avec des matériaux plus classiques et donc moins coûteux.

La figure 11, illustre un deuxième mode de modularité de l'organe de réception du dispositif. L'organe de réception 101 est divisé en quatre bandes longitudinales, deux bandes latérales 108 sur les côtés et deux bandes médianes 109. Dans d'autres modes de mise en oeuvre, le nombre de bandes peut être différent. Des articulations démontables 107 relient les différentes bandes. Dans le cas d'un tapis, les articulations sont de préférence souples.

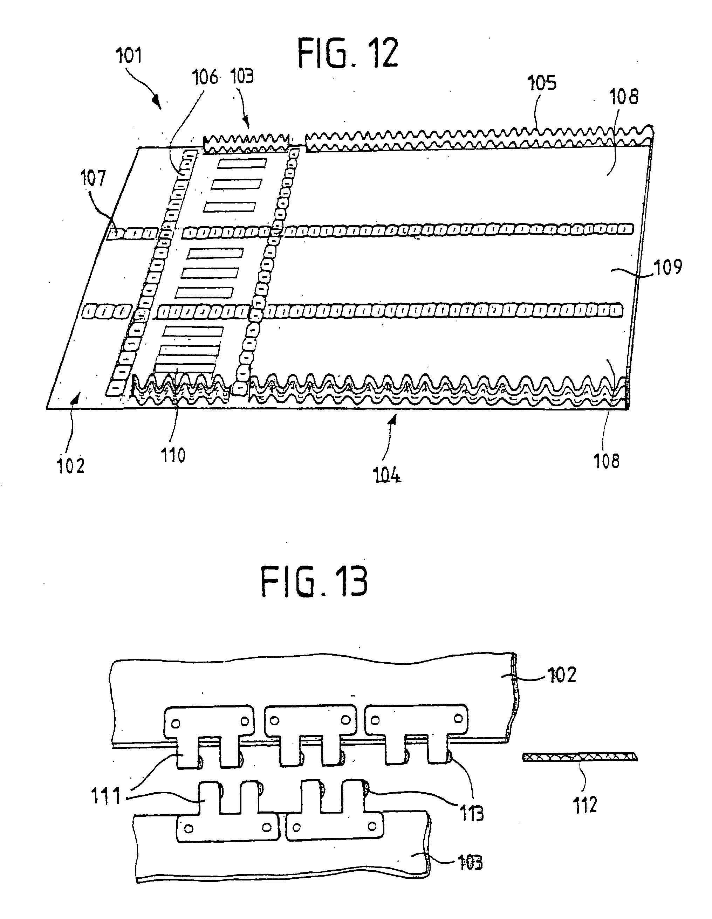

La figure 12 illustre un troisième mode de modularité de l'organe de réception du dispositif résultant, d'une combinaison des deux modes précédents. L'organe de réception 101 est à la fois divisé en trois parties transversales et en bandes longitudinales. Dans d'autres modes de mise en oeuvre, une partie seulement peut être divisée en bandes, par exemple la partie arrière. La partie arrière étant réalisée en un matériau particulièrement résistant et/ou comportant des chevrons, il est préférable en cas de déchirure, usure ou autre problème de ne remplacer qu'une surface minimale de l'organe de réception.

Dans un mode de mise en oeuvre, la partie avant 102 ne sera pas divisée en bandes car peu soumise à l'usure et/ou pouvant être réalisée dans un matériau résistant.

La figure 13 détaille un type d'articulation démontable et souple utilisable plus particulièrement pour un tapis. Cette articulation est constituée de maillons disposés et rivetés, vissés ou autre, en bordure des parties et/ou bandes à assembler. Pour l'assemblage, les maillons opposés sont décalés pour être disposés en quinconce, leurs anneaux 113 étant placés selon un axe unique le long duquel un élément allongé tel qu'un câble 112 est glissé. Les deux extrémités du câble comportent des moyens permettant le blocage du câble afin qu'il ne puisse pas glisser hors des anneaux lors du traitement du sol. Les différents maillons étant des éléments indépendants fixés sur le tapis et un câble souple étant utilisé, l'articulation démontable est souple et le tapis peut s'adapter aux déformations du terrain.

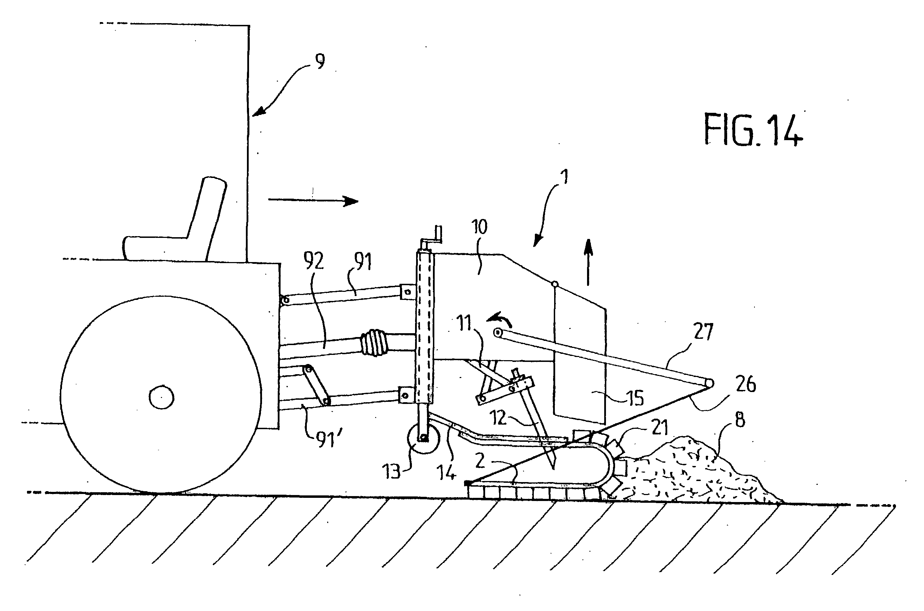

La figure 14 permet de visualiser un dispositif comportant des moyens permettant de déplier et/ou de relever le tapis. Sur cette figure le dispositif est en cours de déchargement des carottes, le dispositif ayant été relevé et déplacé en marche arrière. Le tapis est donc replié et une partie de celui-ci est donc sous les outils de carottage. On comprend donc que si l'opérateur abaisse le dispositif à ce moment, le tapis risque d'être abîmé par les outils.

Dans un premier mode non représenté on prévoit donc un capteur prévenant l'utilisateur et/ou empêchant la descente du dispositif lorsque le tapis est replié sous les outils. Le capteur est de préférence un capteur optique disposé sensiblement dans la zone des outils et orienté vers le bas. Afin de faciliter la détection, le tapis est réalisé dans un matériau de couleur naturelle ou en noir ou peint ou coloré de telle façon qu'il présente un contraste très important avec le sol. Par exemple, le tapis peut recevoir une couche de peinture fluorescente rouge ou jaune qui se distingue bien d'un sol herbacé habituel. Le capteur peut comporter un filtre centré sur la couleur du tapis à détecter.

Dans un second mode, on dispose de moyens actifs permettant au minium d'étaler le tapis. Ces moyens sont au moins un câble 26 et un axe 27 solidaire du bâti. Le câble qui est fixé vers l'extrémité arrière du tapis 2 est également solidaire de l'extrémité arrière de l'axe par une fixation fixe au cas où le câble est de longueur constante ou par un moyen de coulissement ou d'enroulement, par exemple renvoi ou poulie, au cas où la longueur du câble entre le point de fixation au tapis et l'extrémité de l'axe peut être raccourcie ou allongée par une commande. L'axe 27 peut également être fixe ou être mobile en rotation afin de permettre l'étalement du tapis ainsi que son relevage. On envisage également que l'axe puisse s'allonger. Cet axe peut également être commun avec un dispositif de balayage tracté avec le dispositif et disposé en arrière du tapis. L'axe 27 peut être unique, par exemple une fourche solidaire sur les deux cotés du bâti ou un axe simple solidaire en un point médian du bâti ou, encore, mis en oeuvre par paire. Dans un mode préféré, on met en oeuvre deux axes 27 disposés latéralement et on fixe deux câbles vers les deux extrémités arrière et latérales du tapis tel que représenté figure 14.

Le dispositif tel qu'il vient d'être décrit peut mettre en oeuvre un tapis souple pour chacune des trois parties. Il est également envisagé sans sortir du cadre de l'invention qu'une ou plusieurs des parties soient rigides, l'organe de réception étant un plateau rigide en totalité ou étant une combinaison d'organes rigides et souples. Par exemple les parties avant et intermédiaire sont rigides et la partie arrière souple ou, encore, la partie avant est rigide et les parties intermédiaire et arrière sont souples.

A titre d'exemple de matériaux utilisables pour la réalisation d'un tapis souple on peut citer les bandes NNT 20 ECDV, NAK 12 EHDV, FAF 12 E de la société HABASIT France S.A., articulées par des agrafes dénommées "alligator", les rebords ondulés destinés à contenir les carottes étant en caoutchouc et d'une hauteur d'environ 80 mm.

La présente invention est utilisable selon divers procédés de traitement des sols herbacés consistant à effectuer l'aération puis à étaler du sable et à le répartir afin qu'il comble les trous de carottage. La présente invention est aussi utilisable selon un procédé dans lequel l'aération, le ramassage et l'élimination des carottes s'effectuent concomitamment lors du même passage. Enfin, la présente invention est encore utilisable selon un nouveau procédé dans lequel l'aération, le ramassage, l'élimination des carottes et le remplissage des trous de carottage par du sable s'effectuent concomitamment lors du même passage. L'invention rend possible le sablage avant le carottage et le ramassage, limitant à deux, voire un, le passage des engins. Le sablage en avant peut être effectué par tout moyen. En général on effectue un épandage de sable sur une épaisseur sensiblement uniforme. Cependant dans d'autres modes de mise en oeuvre, un épandage de sable pourra se faire par l'intermédiaire de conduites reliées à une réserve de sable et débouchant approximativement en avant des louchets creux, par exemple à la manière des dispositifs de sablage utilisés dans les chemins de fer. Dans un mode préféré, les conduites débouchent légèrement latéralement par rapport aux louchets afin que le carottage s'effectue dans une zone non sablée diminuant ainsi l'usure et la consommation de sable. Il est aussi possible de sabler juste en arrière des louchets, les conduites passant alors à travers le tapis ou le plateau. La présence des chevrons guidant le sable en aval vers les trous permet également une économie substantielle de sable. Il est aussi possible d'utiliser en arrière du dispositif de stockage de l'invention, une brosse classique pour répartition du sable.

Dans un mode préféré de mise en oeuvre du procédé de traitement des sols utilisant le dispositif, on effectue le sablage lors d'un premier passage avant le carottage. Ainsi en deux passages, il est possible de traiter le sol, contrairement aux techniques classiques où au minimum trois passages étaient nécessaires pour aérer puis récupérer les carottes et enfin appliquer puis répartir le sable. Le nombre de passages étant diminué, les déformations du sol sous l'effet des engins sont aussi réduites.

La présente invention est ainsi utilisable selon divers procédés de traitement des sols herbacés et, par exemple, selon un procédé dans lequel l'aération, le ramassage, l'élimination des carottes et le remplissage des trous de carottage par du sable s'effectuent concomitamment lors du même passage, une brosse étant disposée en arrière du dispositif pour balayage du sable.

Les exemples de réalisation et de mise en oeuvre de l'invention qui viennent d'être décrits sont purement indicatifs et ne sauraient en limiter la portée.

## Revendications

1. Dispositif (1, 1') de traitement des sols par aération, le dispositif pouvant se déplacer en translation et être relevé, le dispositif comportant un bâti (10, 10') et des outils (11, 12, 11', 12') mobiles par rapport audit bâti, les outils étant destinés à prélever des carottes (8) dans le sol, les carottes étant éjectées des outils dans une zone d'éjection et stockée (8') dans ledit dispositif **caractérisé en ce qu'**il comporte un organe de réception solidaire du bâti et disposé entre le sol et la zone d'éjection, comportant des orifices de passage (24) des outils, et présentant une face supérieure et une face inférieure, ledit organe de réception comportant un tapis souple (2, 101) reposant sur le sol par au moins une partie de sa face inférieure, les carottes retombant étant stockées sur la face supérieure du tapis.

2. Dispositif selon la revendication 1, **caractérisé en ce que** l'organe de réception est fixé sur un serre-flanc (14).

3. Dispositif selon la revendication 1 ou 2, **caractérisé en ce que** la face inférieure du tapis comporte au moins un type d'éléments en relief par rapport au plan général de la face inférieure.

4. Dispositif selon la revendication 3, **caractérisé en ce que** la face inférieure du tapis comporte au moins une série de chevrons (25) en relief, la série de chevrons étant alignée selon un axe (25') parallèle à l'axe d'avancement du dispositif et passant par l'axe de l'outil de carottage correspondant.

5. Dispositif selon l'une quelconque des revendications précédentes, **caractérisé en ce que** l'orifice de passage (24) de l'outil comporte au moins un bord biseauté et préférentiellement le bord arrière (24') selon le sens d'avancement du dispositif.

6. Dispositif selon l'une quelconque des revendications précédentes, **caractérisé en ce qu'**un organe de déflexion (15) est fixé sur le bâti, ledit organe étant placé en arrière de la zone d'éjection des carottes afin que les carottes (8) éjectées soient rabattues sur l'organe de réception.

7. Dispositif selon l'une quelconque des revendications précédentes, **caractérisé en ce que** l'organe de réception comporte au moins le long de ses deux bords latéraux libres des rebords (21, 21', 105) destinés à maintenir les déchets sur l'organe de réception.

8. Dispositif selon la revendication 7, **caractérisé en ce qu'**au moins une partie des rebords destinés à maintenir les déchets sur l'organe de réception comporte des encoches.

9. Dispositif selon la revendication 7, **caractérisé en ce que** le rebord comporte une bande profilée en L, le côté au contact du tapis étant sensiblement plat et le côté libre étant ondulé.

10. Dispositif selon l'une quelconque des revendications précédentes, **caractérisé en ce que** l'organe de réception est modulaire, les différents modules (102, 103, 104, 108, 109) étant reliés entre eux par des articulations démontables (106, 107).

11. Dispositif selon la revendication 10 **caractérisé en ce que** l'organe de réception est divisé transversalement par rapport au sens d'avancement du dispositif en plusieurs parties, notamment en au moins trois parties correspondant respectivement à une partie avant (102), une partie intermédiaire (103) et une partie arrière (104), la partie intermédiaire correspondant à la zone des orifices (110) de passage des outils, les trois parties étant articulées entre elles par des articulations (106) démontables.

12. Dispositif selon la revendication 11 **caractérisé en ce que** la face inférieure de la partie intermédiaire (103), comporte des reliefs ou picots par exemple d'une hauteur comprise entre 2 et 10 mm, de préférence de l'ordre de 4 mm.

13. Dispositif selon la revendication 11 ou 12 **caractérisé en ce que** la face inférieure de la partie arrière (104), comporte des chevrons.

14. Dispositif selon l'une quelconque des revendications précédentes **caractérisé en ce que** le tapis souple est réalisée en matière élastomérique, en particulier renforcée, avantageusement en polyuréthanne renforcé.

15. Dispositif selon l'une quelconque des revendications 10 à 14 **caractérisé en ce que** l'organe de réception (101) est divisé pour former des bandes longitudinales, s'étendant d'avant en arrière, notamment en au moins deux bandes (108, 109) articulées entre elles par au moins une articulation démontable (107).

16. Dispositif selon l'une quelconque des revendications 10 à 15 **caractérisé en ce que** l'articulation démontable (106, 107) est constituée d'un organe allongé reliant des anneaux disposés en quinconce le long des bords articulés des parties transversales et/ou bandes longitudinales, ledit organe allongé étant un câble souple.

17. Dispositif selon l'une quelconque des revendications précédentes, **caractérisé en ce qu'**il comporte un moyen permettant de déplier et/ou de relever le tapis.

18. Procédé de mise en oeuvre d'un dispositif de traitement des sols par aération consistant à prélever des carottes dans le sol avec des outils et à les stocker dans le dispositif de l'une quelconque des revendications précédentes comportant un tapis souple, **caractérisé en ce que** l'on stocke (8') les carottes éjectées des outils et retombant sur la face supérieure du tapis souple, et que l'on laisse reposer le tapis sur le sol par au moins une partie de sa face inférieure.

19. Procédé selon la revendication 18, **caractérisé en ce qu'**un sablage du sol est effectué préalablement au carottage.

20. Procédé selon la revendication 19, **caractérisé en ce qu'**un balayage ou brossage est effectué à l'arrière de l'organe de réception (2, 101).

## Claims

1. A device (1, 1') for treating soil by aeration, whereby the device may move in translation and be raised, the device comprises a frame (10, 10') and tools (11, 12, 11', 12') mobile with respect to the said frame, the tools are intended for sampling cores (8) in the soil, the cores are ejected from the tools in an ejection area, and stored (8') in the said device, **characterised in that** it comprises a receiving member integral with the frame and arranged between the soil and the ejection area, comprising through openings (24) for the tools, and exhibiting an upper face and a lower face, whereas the said receiving member comprises a flexible carpet (2, 101) resting on the soil by at least one section of its lower face, whereby the falling cores are stored on the upper face of the carpet.

2. A device according to claim 1, **characterised in that** the receiving member is attached to a holding down clamp (14).

3. A device according to claim 1 or 2, **characterised in that** the lower face of the carpet comprises at least a type of protruding elements with respect to the general plane of the lower face.

4. A device according to claim 3, **characterised in that** the lower face of the carpet comprises at least a series of protruding chevrons (25), whereby the series of chevrons is aligned along an axis (25') parallel to the forward axis of the device and going through the axis of the corresponding core tool.

5. A device according to any one of the previous claims, **characterised in that** the through opening (24) for the tool comprises at least one chamfered edge and preferably the rear rim (24') according to the forward direction of the device.

6. A device according to any one of the previous claims, **characterised in that** a deflecting member (15) is fixed to the frame, whereas the said member is placed at the rear of the ejection area of the cores so that the ejected cores (8) are thrown back onto the receiving member.

7. A device according to any one of the previous claims, **characterised in that** the receiving member comprises at least along both its free lateral edges rims (21, 21' 105) intended for maintaining the waste on the receiving member.

8. A device according to claim 7, **characterised in that** at least a section of the rims intended for maintaining the waste on the receiving member comprises notches.

9. A device according to claim 7, **characterised in that** the rim comprises an L-shaped band, whereas the side in contact with the carpet is substantially flat and the free side is corrugated.

10. A device according to any one of the previous claims, **characterised in that** the receiving member is modular, whereas the different modules (102, 103, 104, 108, 109) are connected together by dismountable joints (106, 107).

11. A device according to claim 10, **characterised in that** the receiving member is divided transversally with respect to the progress direction of the device in several sections, notably into at least three sections corresponding respectively to a front section (102), an intermediate section (103) and a rear section (104), whereby the intermediate section corresponds to the area of the through openings (110) for the tools, whereby the three sections are hinged together by dismountable joints (106).

12. A device according to claim 11, **characterised in that** the lower face of the intermediate section (103) comprises bulges or spikes for example between 2 and 10 mm in height, preferably in the order of 4 mm.

13. A device according to claim 11 or 12, **characterised in that** the lower face of the rear section (104) comprises chevrons.

14. A device according to any one of the previous claims, **characterised in that** flexible carpet is made of an elastomer material, in particular a reinforced material, advantageously a reinforced polyurethane material.

15. A device according to any one of claims 10 to 14, **characterised in that** the receiving member (101) is divided to form longitudinal bands, extending from front to back, notably into two bands (108, 109) hinged together by at least one dismountable joint (107).

16. A device according to any one of claims 10 to 15, **characterised in that** the dismountable joint (106, 107) consists of an elongated member linking rings that are staggered along the hinged edges of the transversal sections and/or longitudinal bands, whereby the said elongated member is a flexible cable.

17. A device according to any one of the previous claims, **characterised in that** it comprises a means enabling to unfold and/or to raise the carpet.

18. Method for implementing a device for treating sol by aeration consisting in sampling cores from the soil with tools, then in storing them in the device according to any one of the previous claims comprising a flexible carpet, **characterised in that** the cores ejected from the tools and falling onto the upper face of the flexible carpet, are stored (8') and **in that** the carpet rests on the soil by at least a section of its lower face.

19. A method according to claim 18, **characterised in that** soil sanding is made previously to core boring.

20. A method according to claim 19, **characterised in that** sweeping or brushing takes place at the rear of the receiving member (2, 101).

## Patentansprüche

1. Vorrichtung (1, 1') zum Behandeln von Böden durch Belüften, wobei die Vorrichtung beim Fahren verschoben und angehoben werden kann, wobei die Vorrichtung einen Rahmen (10, 10') und Werkzeuge (11, 12, 11', 12'), die in Bezug auf den Rahmen beweglich sind, umfasst, wobei die Werkzeuge dazu bestimmt sind, Bohrkerne (8) aus dem Boden zu entnehmen, wobei die Bohrkerne aus den Werkzeugen in eine Auswurfzone ausgeworfen werden und in der Vorrichtung gelagert (8') werden, **dadurch gekennzeichnet, dass** sie ein Aufnahmeorgan umfasst, das mit dem Rahmen fest verbunden und zwischen dem Boden und der Auswurfzone angeordnet ist, das Durchgangsöffnungen (24) der Werkzeuge umfasst und eine obere und eine unter Fläche aufweist, wobei das Aufnahmeorgan eine biegsame Matte (2, 101) aufweist, die über mindestens einem Teil ihrer unteren Seite auf dem Boden aufliegt, wobei die herunterfallenden Bohrkerne auf der oberen Seite der Matte gelagert werden.

2. Vorrichtung nach Anspruch 1, **dadurch gekennzeichnet, dass** das Aufnahmeorgan auf einer Haltevorrichtung (14) befestigt ist.

3. Vorrichtung nach Anspruch 1 oder 2, **dadurch gekennzeichnet, dass** die untere Seite der Matte in Bezug auf die allgemeine Ebene der unteren Seite mindestens einen Typ Elemente in Reliefanordnung umfasst.

4. Vorrichtung nach Anspruch 3, **dadurch gekennzeichnet, dass** die untere Seite der Matte mindestens eine Reihe von Sparren (25) in Reliefanordnung umfasst, wobei die Reihe Sparren gemäß einer Achse (25'), die parallel zur Vorfahrachse der Vorrichtung verläuft, ausgerichtet ist und die Achse des entsprechenden Bohrwerkzeugs passiert.

5. Vorrichtung nach einem der vorstehenden Ansprüche, **dadurch gekennzeichnet, dass** die Durchgangsöffnung (24) des Werkzeugs mindestens einen abgefasten Rand und vorzugsweise den hinteren Rand (24') gemäß der Fahrtrichtung der Vorrichtung aufweist.

6. Vorrichtung nach einem der vorstehenden Ansprüche, **dadurch gekennzeichnet, dass** ein Ablenkorgan (15) an dem Rahmen befestigt ist, wobei dieses Organ hinter der Auswurfzone der Bohrkerne angeordnet ist, damit die ausgeworfenen Bohrkerne (8) auf das Aufnahmeorgan heruntergeschlagen werden.

7. Vorrichtung nach einem der vorstehenden Ansprüche, **dadurch gekennzeichnet, dass** das Aufnahmeorgan mindestens entlang seiner beiden seitlichen freien Ränder Krempen (21, 21', 105) umfasst, die dazu bestimmt sind, den Abfall auf dem Aufnahmeorgan zurückzuhalten.

8. Vorrichtung nach Anspruch 7, **dadurch gekennzeichnet, dass** mindestens ein Teil der zum Zurückhalten des Abfalls auf dem Aufnahmeorgan bestimmten Krempen Kerben umfasst.

9. Vorrichtung nach Anspruch 7, **dadurch gekennzeichnet, dass** die Krempe ein L-Profilband aufweist, wobei die mit der Matte in Berührung kommende Seite im Wesentlichen flach und die freie Seite gewellt ist.

10. Vorrichtung nach einem der vorstehenden Ansprüche, **dadurch gekennzeichnet, dass** das Aufnahmeorgan modulartig ist, wobei verschiedene Module (102, 103, 104, 108, 109) miteinander durch abnehmbare Gelenke (106, 107) verbunden sind.

11. Vorrichtung nach Anspruch 10, **dadurch gekennzeichnet, dass** das Aufnahmeorgan in Bezug auf die Fahrtrichtung der Vorrichtung in mehrere Teile quer unterteilt ist, insbesondere in mindestens drei Teile, die jeweils einem vorderen Teil (102), einem Zwischenteil (103) und einem hinteren Teil (104) entsprechen, wobei der Zwischenteil der Zone der Durchgangsöffnungen (110) der Werkzeuge entspricht, wobei die drei Teile miteinander durch abnehmbare Gelenke (106) angelenkt sind.

12. Vorrichtung nach Anspruch 11, **dadurch gekennzeichnet, dass** die untere Seite des Zwischenteils (103) Reliefs oder Spitzen zum Beispiel mit einer Höhe zwischen 2 und 10 mm, vorzugsweise in der Größenordnung von 4 mm, umfasst.

13. Vorrichtung nach Anspruch 11 oder 12, **dadurch gekennzeichnet, dass** die untere Seite des hinteren Teils (104) Sparren aufweist.

14. Vorrichtung nach einem der vorstehenden Ansprüche, **dadurch gekennzeichnet, dass** die biegsame Matte aus einem Elastomermaterial hergestellt ist, das insbesondere verstärkt ist, vorteilhafterweise aus verstärktem Polyurethan.

15. Vorrichtung nach einem der Ansprüche 10 bis 14, **dadurch gekennzeichnet, dass** das Aufnahmeorgan (101) unterteilt ist, um Längsbänder zu bilden, die sich von vorn nach hinten erstrecken, insbesondere in mindestens zwei Bänder (108, 109), die miteinander durch mindestens ein abnehmbares Gelenk (107) angelenkt sind.

16. Vorrichtung nach einem der Ansprüche 10 bis 15, **dadurch gekennzeichnet, dass** das abnehmbare Gelenk (106, 107) aus einem länglichen Organ besteht, das Ringe verbindet, die entlang der angelenkten Ränder der Querteile und/oder Längsbänder zickzackartig angeordnet sind, wobei das längliche Organ ein biegsames Kabel ist.

17. Vorrichtung nach einem der vorstehenden Ansprüche, **dadurch gekennzeichnet, dass** sie ein Mittel umfasst, das das Auffalten und/oder Anheben der Matte erlaubt.

18. Verfahren zum Betreiben einer Vorrichtung zum Behandeln von Böden durch Belüftung, das darin besteht, Bohrkerne mit Werkzeugen aus dem Boden zu entnehmen und sie in der Vorrichtung nach einem der vorstehenden Ansprüche, die eine biegsame Matte umfasst, zu lagern, **dadurch gekennzeichnet, dass** die Bohrkerne, die aus den Werkzeugen ausgeworfen werden und auf die obere Seite der biegsamen Matte fallen, gelagert (8') werden, und dass man die Matte über mindestens einen Teil ihrer unteren Seite auf dem Boden aufliegen lässt.

19. Verfahren nach Anspruch 18, **dadurch gekennzeichnet, dass** vor dem Kernbohren ein Sanden des Bodens erfolgt.

20. Verfahren nach Anspruch 19, **dadurch gekennzeichnet, dass** hinter dem Aufnahmeorgan (2, 101) ein Fegen oder Bürsten erfolgt.
